# EUROPEAN PATENT APPLICATION

(11) **EP 4 491 029 A1**
(43) Date of publication of application: **15.01.2025**
(21) Application number: 23185670.9
(22) Date of filing: 14.07.2023
(51) Int. Cl.: A23J 3/00, A23J 3/14, A23J 3/22, A23L 29/00, A23L 29/20, A23L 33/10

(54) **A GELLED PROTEINACEOUS FOOD COMPOSITION**

(71) Applicant: Unilever IP Holdings B.V., 3013 AL Rotterdam (NL)
(72) Inventor: FLENDRIG, Leonardus Marcus, 6708 WH Wageningen (NL); GOUZY, Roland Mathieu, 6708 WH Wageningen (NL); MACIAS RODRIGUEZ, Braulio Andres, 6708 WH Wageningen (NL); TSEKOU, Christos, 6708 WH Wageningen (NL); VELIKOV, Krassimir Petkov, 6708 WH Wageningen (NL)
(74) Representative: Tjon, Hon Kong Guno

(57) **Abstract**

The invention relates to a gelled proteinaceous food composition comprising a combination of thermally gelling non-animal protein, cellulose microfibrils and water. The invention also relates to a method for preparing the gelled proteinaceous food composition and to a food product comprising the gelled proteinaceous food composition.

## Description

### Field of the invention

The invention relates to a gelled proteinaceous food composition comprising a combination of thermally gelling non-animal protein, cellulose microfibrils and water. The gelled proteinaceous food composition of the present invention has a very desirable texture and juiciness.

The invention also provides a method for preparing the aforementioned gelled proteinaceous food composition, said method comprising a high-shear treatment step. Further, the invention encompasses a food product comprising the aforementioned gelled proteinaceous food composition.

### Background of the Invention

Meat is considered the highest quality protein source, not only due to its nutritional characteristics, but also for its appreciated taste. Meat is nutritious because meat protein contains all essential amino acids for humans. In addition, meat comprises essential vitamins, such as vitamin B12, and is rich in minerals. Meat also contains fat tissue, greatly contributing to food acceptability by imparting specific characteristics such as appearance, texture, and mouthfeel. The fat tissue also contributes to the properties of the meat as it is prepared and cooked.

However, from a health point of view, an excessive intake of meat products cannot be recommended, especially because the fat tissue in meat contains cholesterol and a higher proportion of saturated fats. Further, due to concerns about climate change, a global shortage of animal protein and economic reasons, there is an increased interest in the consumption of non-meat proteins by consuming meat analogues instead of actual meat products.

Meat analogues are prepared to resemble meat as much as possible in appearance, taste and texture. Meat analogues are typically prepared from texturized vegetable protein. Texturized vegetable protein, are characterised by having an identifiable structure and structural integrity, such that each unit will withstand hydration, cooking and other procedures used in preparing the texturized vegetable protein for consumption.

Beside texturized vegetable protein meat analogues typically comprise a binding agent, animal fat tissue analogues, fats, flavouring, insoluble dietary fibres (e.g. cellulose) and additional protein. The use of cellulose in meat analogues has been described in the art.

WO 2014/081285A1 describes the combination of hydrated plant dietary fibres with vegetable protein using a low-shear mixer to create a meat analogue via extrusion.

WO2020/089445A1 describes the combination of plant dietary fibres and protein using a low-shear mixer to provide a binding agent with similar functional properties as methylcellulose.

WO2019/048715A2 describes combining expanded pectin-containing biomass and non-thermally gelling protein as a binder in meat analogues to provide a meat-like texture.

Database Technical Disclosure (An IP.com Prior Database Technical Disclosure, IP.com Number: IPCOM000263621D, IP.com Electronic Publication Date: September 18, 2020) shows the use of powder citrus fibre that has been previously homogenised with a low shear mixer and dried to powder as a clean label binder in burgers.

### Summary of the Invention

A first aspect of the invention relates to a gelled proteinaceous food composition with an elastic compression modulus larger than 9 kPa comprising:
a. 3-35 wt.% of thermally gelling non-animal protein;
b. 0.2-6 wt.% of cellulose microfibrils;
c. 0-20 wt.% non-animal lipid;
d. 0-20 wt.% of polysaccharides;
e. 0.1-90 wt.% water;
wherein the composition has a composition homogeneity parameter (CHP) of at least 0.075.

The gelled proteinaceous food compositions of the present invention may be used as a meat analogue (e.g. sausage filing or minced meat analogue) or as an ingredient in a meat analogue. In a meat analogue the gelled proteinaceous food composition provides structure, such as improved integrity, thermal stability and firmness, and less stickiness. In addition, the gelled structure holds moisture and provides juiciness.

Alternatively, gelled proteinaceous food compositions of the present invention may be used in food products such as soups, pasta, noodles, spreads, meal makers, souses, dressings, savoury concentrates, snacks, beverages, and frozen desserts. In these products the gelled compositions provide a source of texture and juiciness. It is also a convenient way to provide protein in powdered products.

Although the inventors do not wish to be bound by theory, it is believed that the ultra-fine distribution of cellulose microfibrils within the gelled proteinaceous food composition leads to the previously described benefits. The distribution levels are reflected in the composition homogeneity parameter (CHP), the method of determination described below.

A second aspect of the invention relates to a method for preparing the aforementioned gelled proteinaceous food composition, comprising the steps of:
i. providing an aqueous dispersion comprising a source of cellulose microfibrils;
ii. producing an aqueous dispersion comprising cellulose microfibrils by treating the aqueous dispersion comprising a source of cellulose microfibrils with high shear and by adding thermally gelling non-animal protein to the aqueous dispersion before, during and/or after the high shear treatment; and
iii. heating the aqueous dispersion comprising cellulose microfibrils and thermally gelling non-animal protein to a temperature between 40-200°C to produce a gelled proteinaceous composition.

Further, a third aspect of the invention relates to a food product comprising 1-80 wt.% of the aforementioned gelled proteinaceous food composition.

### Detailed Description of the Invention

The terms "a" and "an" and "the" and similar referents as used herein refer to both the singular and the plural, unless otherwise indicated herein or clearly contradicted by context.

Throughout this specification and the claims which follow, unless the context requires otherwise, the word "comprise" and variations such as "comprises" or "comprising" will be understood to imply the inclusion of a stated integer or step or group of integers or steps but not the exclusion of any other integer or step or group of integers or steps.

Numerical ranges expressed in the format "from x to y" are understood to include x and y.

Whenever components A and B are said to be present in a weight ratio of x:y, what is meant is that the concentration of component A in wt.% divided by the concentration of component B in wt.% equals x:y.

Concentrations expressed by weight of dry matter, as mentioned herein, refer to the amount of dry ingredient present in a composition as a percentage of the total amount of dry matter contained in the same composition.

Ratios mentioned herein are based on weight/weight, unless indicated otherwise. Similarly, all percentages are percentages by weight (w/w) unless otherwise indicated.

When multiple preferred ranges are described in the format "from x to y" for a specific feature, it should be understood that all ranges combining the different endpoints are also contemplated.

If, for a particular component, a range of 0% to y% or less than y% is recited, said ingredient may be absent.

The term "meat analogue", as used herein, refers to an edible product that does not contain animal meat but is designed to have the flavour, appearance, and mouthfeel of animal meat. Examples include burgers, sausages, nuggets, schnitzels etc. If the meat analogue is coated, such as a nugget or schnitzel, the term "meat analogue" is understood to refer to the whole composition, including any potential coating.

The term" vegetarian", as used herein, in relation to a product or an ingredient, refers to a product or an ingredient that does not contain animal meat or ingredients that have been derived from animal meat.

The term" vegan", as used herein, in relation to a product or an ingredient, refers to a product or an ingredient that has not been derived from animals. Meat, eggs and dairy products are examples of products that are not vegan.

The term "non-animal protein", as used herein, refers to protein from a non-animal source like a plant protein, a fungal protein, a microbial protein, or an algae protein. It excludes protein from mammals, fish, crustaceans, and birds.

The term "texturised non-animal protein" as used herein refers to proteinaceous material that is produced by cooking an aqueous mixture of water, protein concentrate (optionally protein isolates) and optionally other ingredients in an extruder cooker and extruding the mixture. The extruded material is hydrated and can be used as hydrated non-animal protein without further hydration. After extrusion, the texturised non-animal protein may also be ground or cut into pieces and subsequently dried.

The term "polysaccharide" as used herein refers to all edible polysaccharides excluding cellulose microfibrils.

The term" fat", as used herein, refers to glycerides selected from triglycerides, diglycerides, monoglycerides, phosphoglycerides and combinations thereof. The term "fat" encompasses fats that are liquid at 20 °C and fats that are solid or semi-solid at 20 °C. The melting point of a fat can be determined according to ISO 6321 (2021).

A first aspect of the invention relates to a gelled proteinaceous food composition with an elastic compression modulus larger than 9 kPa comprising:
a. 3-35 wt.% of thermally gelling non-animal protein;
b. 0.2-6 wt.% of cellulose microfibrils;
c. 0-20 wt.% non-animal lipid;
d. 0-20 wt.% of polysaccharides;
e. 0.1-90 wt.% water;
wherein the composition has a composition homogeneity parameter (CHP) of at least 0.075.

Preferably, the CHP of the gelled proteinaceous food composition is at least 0.08. Even more preferably, the CHP of the proteinaceous composition is 0.09-0.25. Most preferably, the CHP of the proteinaceous composition is 0.10-0.20.

Preferably, the elastic compression modulus of the gelled proteinaceous food composition is larger than 10 kPa, more preferably the elastic compression modulus is between 20-1000 kPa.

Preferably, the cellulose microfibrils and thermally gelling non-animal protein are present in the proteinaceous composition of the present invention in a weight ratio of 1:100 -2:1, more preferably 1:40 - 1:1.

The term "thermally gelling non-animal protein", as used herein, refers to a type of protein that can undergo a gelation process when subjected to heat at the concentration, pH and salt level used in the gelled proteinaceous food composition. In the case of thermal gelation, a gel network is formed by the proteins upon heating, which is retained upon cooling.

Preferably, gelation occurs at a temperature of at least 40 °C, more preferably of at least 45 °C, even more preferably of at least 50 °C, still more preferably of at least 60 °C, yet more preferably of at least 70 °C, most preferably of at least 80 °C. Preferably gelation occurs at a temperature of not more than 100 °C.

Preferably, the thermally gelling non-animal protein is selected from plant protein, fungal protein, microbial protein or combinations thereof. Examples of thermally gelling non-animal protein include legume protein isolates like soy protein isolate, pea protein isolate, mung bean protein isolate, oilseed proteins such as sunflower protein and rapeseed protein, and other plant proteins like potato protein, RuBisCo, mung 8S globulin, pea globulin, pea albumin, lentil protein, zein, oleosin and combinations thereof. Another example of a thermally gelling non-animal protein is a gel-forming *Chlorella* protein.

In a preferred embodiment, the thermally gelling non-animal protein is a thermally gelling plant protein, more preferably the thermally gelling plant protein is one or more of legume protein, oil seed protein, potato protein or combinations thereof.

Preferably, the gelled proteinaceous food composition comprises 4-32.5 wt.% of thermally gelling non-animal protein, more preferably 5-30 wt.%, most preferably 6-25 wt.% of thermally gelling non-animal protein.

The term cellulose microfibrils" is a term known in the art (e.g. Chinga-Carrasco, Nanoscale Research Letters, 2011, 6:417), and are different from cellulose fibers, such as for example present in wood, which consist of linear assemblies of cellulose microfibrils and have diameter of several micrometers. The cellulose microfibrils are insoluble in water. Cellulose microfibrils are preferably not chemically modified. The cellulose microfibrils are preferably not oxidized.

As known in the art, cellulose microfibrils may be suitably obtained from cell wall material by removing soluble and unbound sugars, protein, oils, waxes and phytochemicals (e.g. carotenoids, lycopene). This is suitably achieved using well known techniques including cutting up the cell wall material, cooking, washing, centrifugation, decanting and drying as is well-known to the skilled person.

The cellulose microfibrils are typically present in the composition in the form of single fibrils or as aggregates with a cross section of a few tens of nanometres to a few micrometres. Cellulose microfibrils are preferably present in aggregates with a cross section of from 3 to 100 nanometer, preferably of from 3 to 50 nanometers.

In a preferred embodiment, the cellulose microfibrils are provided by sources of parenchymal plant tissue (e.g. insoluble dietary fibres, fruit or vegetables), bacteria, algae and combinations thereof. More preferably, the cellulose microfibrils are provided by sources of parenchymal plant tissue. Most preferably, the cellulose microfibrils are provided by sources of parenchymal tissue selected from fruits, roots, bulbs, tubers, seeds, leaves and combinations thereof. Preferred sources include citrus, tomato, peach, pumpkin, kiwi, apple, mango, sugar beet, beetroot, turnip, parsnip, maise, oat, wheat, peas, and combinations thereof. Most preferably, the cellulose microfibrils are provided by sources of citrus fruit, tomato, apple, sugar beet or combination thereof.

Preferably, the sources of cellulose microfibrils are purees, pastes or powders.

Preferably, the gelled proteinaceous food composition comprises 0.2-5 wt.% cellulose microfibrils, more preferably 0.4-4 wt.%, most preferably 0.6-3 wt.% cellulose microfibrils.

Cellulose microfibrils have a crystalline structure, the degree of which greatly affects properties such as mechanical strength and water-binding capacity. In particular, the inventors found that an increased water-binding capacity provides the gelled proteinaceous food composition with a higher degree of juiciness. The water-binding capacity decreases with an increased degree of crystallinity due to a more tightly packed structure, whereas a lower degree of crystallinity allows for a higher water-binding capacity due to the more open structure. It is therefore preferred that the cellulose microfibrils have an average degree of crystallinity of less than 50%, more preferably less than 35%, most preferably less than 30%. The table below shows the average degree of crystallinity of typical sources of cellulose microfibrils.

| **Source** | **Average degree of crystallinity (%)** |
|---|---|
| Tomato fibres | 32 |
| Citrus fibre (Citrus fibre AQ+N) | 29 |
| Bacterial cellulose (Nata de Coco) | 74 |
| Cotton | 72 |
| Wood pulp fibre (Meadwestvaco) | 61 |
| Sugar beet fibre (Nordix Fibrex) | 21 |
| Pea fibres (PF200vitacel) | 42 |
| Oat fibres (780 Sunopta) | 43 |
| Corn hull (Z-trim) | 48 |
| Sugar cane fibre (Ultracel) | 49 |

The gelled proteinaceous food composition preferably comprises 0.1-20 wt.% of non-animal fat, preferably 0.3-15 wt.%, more preferably 0.5-10 wt.% of non-animal fat.

The non-animal fat preferably comprises at least 60 wt.%, more preferably at least 80 wt.%, most preferably at least 95 wt.% of an oil that is liquid at 20 °C. Examples of such liquid oils include linseed oil, castor oil, sunflower oil, soybean oil, rapeseed oil, cottonseed oil, safflower oil, flaxseed oil, rice bran oil, olive oil, tung oil, cotton seed oil, peanut oil, algal oil, corn oil, palm fruit oil, palm kernel oil, canola oil, coconut oil, mango oil and mixtures thereof.

The non-animal fat is preferably selected from one or more of non-animal lipid is selected from one or more of algal oil, sunflower oil, corn oil, soybean oil, palm fruit oil, palm kernel oil, safflower oil, flaxseed oil, rice bran oil, cottonseed oil, olive oil, canola oil, coconut oil, and mango oil. More preferably the non-animal fat is selected from sunflower oil, soybean oil, and combinations thereof.

Preferably, the gelled proteinaceous food composition comprises 0.1-20 wt.% of polysaccharide, more preferably 1-15 wt.% of polysaccharide, most preferably 2-10 wt.% of polysaccharide.

The polysaccharide is preferably selected from the group consisting of carob bean gum, tara gum, cassia gum, chitosan, gum arabic, konjac mannan gum, carrageenan, methylcellulose, xanthan gum, pectin, starch, and combinations thereof.

The water content of the gelled proteinaceous food composition preferably is 25-85 wt.%, more preferably 40-80 wt.%, and most preferably 50-75 wt.%.

Preferably, the sum of thermally gelling non-animal protein, cellulose microfibrils, non-animal lipid, polysaccharide and water together constitutes at least 60 wt.% of the gelled proteinaceous food composition, more preferably at least 65 wt.%, most preferably 70-100 wt.% of the composition.

Preferably, the gelled proteinaceous food is a vegetarian food composition, preferably a vegan food composition.

In a particularly preferred embodiment, the gelled proteinaceous is a meat analogue and comprises:
a. 10-35 wt.% of thermally gelling non-animal protein;
b. 0.2-6 wt.% of cellulose microfibrils;
c. 0-20 wt.% non-animal lipid;
d. 0-20 wt.% of polysaccharides;
e. 35-85 wt.% water.

When the gelled proteinaceous food composition is used as meat analogue it is preferably a vegetarian meat analogue, more preferably the meat analogue is a vegan meat analogue.

When the gelled proteinaceous food composition is used as meat analogue it may be preferably provided in different shapes, such as patties, balls, chunks, minced meat and sausages.

A second aspect of the invention relates to a method for preparing the gelled proteinaceous food composition as described herein before, comprising the steps of:
i. providing an aqueous dispersion comprising a source of cellulose microfibrils;
ii. producing an aqueous dispersion comprising cellulose microfibrils by treating the aqueous dispersion comprising a source of cellulose microfibrils with high shear and by adding thermally gelling non-animal protein to the aqueous dispersion before, during and/or after the high shear treatment; and
iii. heating the aqueous dispersion comprising cellulose microfibrils and thermally gelling non-animal protein to a temperature between 40-200 °C to produce a gelled proteinaceous composition.

Preferably, the embodiments described herein above with regard to the gelled proteinaceous food composition equally apply to the method of preparing the gelled proteinaceous food composition.

Said aqueous dispersion undergoes a high-shear treatment to produce an ultra-fine dispersion of cellulose microfibrils. The CHP of the produced dispersion is preferably at least 0.08, more preferably 0.09-0.25 and most preferably 0.1-0.2.

Preferably the high shear treatment includes one or more steps of high pressure homogenisation at a pressure between 200-4000 bar. More preferably, the high-shear treatment includes one or more steps of high-pressure homogenisation at a pressure between 300-3000 bar, more preferably between 400-2000 bar, most preferably between 500-1500 bar.

In a preferred embodiment, the high-pressure homogenisation is microfluidization and includes one or more steps of microfluidization at a pressure between 300-4000 bar, more preferably between 500-3000 bar, most preferably between 700-2000 bar.

In an alternative preferred embodiment, other physical methods known in the art for defibrillation or/and dispersing of cellulose such as sonication, milling, grinding, steam explosion, refining, or combinations of these can also be used to produce an aqueous dispersion comprising cellulose microfibrils (e.g. Osong, S.H., Norgren, S. & Engstrand, P. Processing of wood-based microfibrillated cellulose and nanofibrillated cellulose, and applications relating to papermaking: a review. Cellulose 23, 93-123 (2016). https://doi.org/10.1007/s10570-015-0798-5).

Preferably, the aqueous dispersion comprises 0.2-12 wt.% of a source of cellulose microfibrils, more preferably 0.4-10 wt.%, most preferably 0.6-8 wt.% of a source of cellulose microfibrils.

In the method, the thermally gelling non-animal protein is preferably added at least partially to the aqueous dispersion before the high-shear treatment in step ii.

The produced gelled proteinaceous food composition in step iii. is preferably shaped into meat analogue shapes, preferably shaped by an extruder.

In an alternative preferred embodiment, the aqueous dispersion comprising cellulose microfibrils and thermally gelling non-animal protein is filled into a sausage casing before step iii.

Preferably, the heating in step iii. is performed at a temperature between 50-150 °C, more preferably between 60-100 °C.

Preferably, the heating of step iii. is performed in an extruder or 3D food printing device.

A third aspect of the present invention relates to a food product comprising 1-80 wt.% of the gelled proteinaceous food composition as described herein before.

Preferably the food product comprises 2-60 wt.% of the gelled proteinaceous food composition, more preferably 3-40 wt.% and most preferably 4-20 wt.% of the gelled proteinaceous food composition.

The food product is preferably selected from the group of meat analogues, soups, pasta, noodles, spreads, meal makers, souses, dressings, savoury concentrates, snacks, beverages, and frozen desserts.

In a particularly preferred embodiment, the food product is a meat analogue further comprising by weight of the meat analogue one or more of:
- 0-75 wt.% of hydrated texturized non-animal protein pieces;
- 0-70 wt.% of a binder; and
- 0-40 wt.% of animal fat tissue analogue.

More preferably, the meat analogue comprises by weight of the meat analogue:
- 2-40 wt.% of the gelled proteinaceous food composition
- 20-65 wt.% of hydrated texturized non-animal protein pieces
- 5-50 wt.% of a binder; and
- 0-20 wt.% of animal fat tissue analogue.

Examples of optional further ingredients in the meat analogue include non-animal fat, emulsifiers, acidulants, preservatives, colouring, flavouring, vitamins and minerals.

The meat analogue is preferably a vegetarian meat analogue, more preferably the meat analogue is a vegan meat analogue.

The meat analogue may be preferably provided in different shapes, such as patties, balls, chunks, minced meat and sausages.

The following non-limiting examples further illustrate the invention.

### EXAMPLES

### Measurement methods

### Linear elastic compression modulus (Young's modulus)

Proteinaceous compositions were analyzed using the TA.XTplus Texture Analyser (Stable Micro Systems, UK) using flat cylindrical probes with a diameter of either 6 cm or 1.27 cm and compressed to a strain of 50% or 80% using a trigger force of 2-10 g and test speed of 1-5 mm/sec. The force F during compression and strain ε were measured automatically once the trigger force is achieved. The deformed surface area A and stress σ were determined based on contact area set by the diameter of the gel or the probe according to A = πd²/4 and σ = F/A. Force-displacement curves were converted into stress-strain curves.

Stress-strain curves were analysed to determine the linear young's modulus E = σ/ε. The data for strain ε (x-axis) and stress σ (y-axis) were plotted in a suitable programming and numeric computing environment. The data was fitted to a smoothing spline to allow resampling of the strain-stress data. The resampling spacing length is 1000. A Savitzky-Golay technique is applied for smoothing and differentiating the data by least-square regression analysis. The Savitzky-Golay uses a 2^{nd} order polynomial and ~61 sample frames. This enables the identification of the linear limit by pinpointing inflexion points given by estimates of the first and second derivatives. Using the derivatives estimates, the first point is detected where the second derivative is close to zero. From that point, a window of 500 points is created where other instances where the second derivative is close to zero are found. The linear Young's modulus E = σ/ε is calculated from the mean of all those instances and with a tolerance variation of 0.003. Goodness of fit is deemed adequate for R² above 0.99. When lower goodness of fit is observed, R² < 0.99, due to the non-linearity of uneven specimen surfaces, the non-linear part is gradually excluded until the goodness of fit improves to R² ≥ 0.99.

### Composition Homogeneity Parameter (CHP)

The CHP provides a measure for the extent to which the CMFs have been homogenously dispersed in the composition. The CHP is measured with a method based on confocal scanning laser microscopy (CSLM) and performed on a standardized sample comprising the CMFs. The protocol to establish the CHP includes three parts: (A) standardized sample preparation, (B) CSLM microscopy to obtain micrographs of the standardized sample, and (C) digital image analysis to calculate the CHP value.

### (A) Standardized sample preparation

Proteinaceous compositions were brought to room temperature (20°C) by holding for 1 hour. Subsequently, a sample from the proteinaceous food composition is diluted with water to obtain a 200 g dispersion with 0.10 wt.% cellulose by weight of the dispersion, in a 500 ml plastic beaker with an inner diameter of 80 mm. Samples were then mixed in overhead stirred (with impeller geometry) at 2000rpm for 5 min, and filtered with a 125 µm sieve. Then, the permeate was stirred using a Silverson L5M-A overhead mixer (small screen, 1 mm holes) at 5000 rpm for 5 minutes. This mixing step ensures the cellulose microfibrils are evenly distributed over the diluted sample volume.

Optionally, large protein particles, e.g. textured vegetable protein particles, may be further removed by additional centrifugation and/or protein hydrolysis steps. The centrifugation step consists in placing 20 mL of slurry into 50 mL centrifugation tubes, and subjected to 250rpm for 3 min. The supernatant is then collected from the middle of the tube. The protein hydrolysis steps consists in preparing a solution of 9 mg of pepsin from porcine gastric mucosa (Sigma Aldrich) per 1 mL 0.01 M HCl is prepared. Then, 1 mL of the pepsin in HCl solution is added to 17 mL of a citrus fiber dispersion to reach a final citrus fibre concentration of 0.10 wt.%. The pH is then adjusted to 1.8-2 by dropwise addition of 1 M HCl, and the dispersion is shaken gently and allowed to hydrolyse for 2h in a water bath at 37 °C.

Then, 3 mL of the mixed sample was transferred to a glass vial with a plastic Pasteur pipette, to which 25 µL of 0.5 % w/v Congo Red aqueous solution was added to dye the standardised sample. To ensure even dye distribution throughout the sample, it may, for instance, be gently shaken. Then, 600 µmL of the sample is pipetted with a 1 mL tip onto a glass coverslip (High precision No. 1.5H, 2.4 cm width, 5 cm length, 170 ± 5 µm thickness) to which a cover well imaging chamber (2 cm diameter X 0. 25 m thickness) has been glued previously.

### (B) CSLM microscopy to obtain micrographs of the standardized sample

The dyed standardised samples were imaged with a Zeiss LSM 880 confocal scanning laser microscope equipped with a diode-pumped solid-state laser line emitting at a wavelength of 561 nm and operated at excitation wavelengths: 570-687 nm, fixed laser power, using a 10x objective with a numerical aperture of 0.45 and working distance 5.2 mm, and thereby recording at least 25 independent micrographs at a resolution of 1024×1024 pixels where each pixel represents a sample size of within the range of 1490 by 1490 nm to 1540 by 1540 nm, taking each image at a depth penetration between 50-70 µm, adjusting the laser intensity and gain settings such that in every image between 0.1 and 2% of the pixels are saturated and recording the micrographs at a colour depth of at least 8 bits per pixel. Comparisons of CHP values across samples were made in images having similar % of saturated pixels (0.5 - 2%) and undersaturated pixels (> 0.01%).

Micrographs should be recorded whilst avoiding imaging air bubbles, sample edges or areas where the source of cellulose microfibrils is locally concentrated. Likewise, care should be taken to avoid imaging other objects of macroscopic dimensions that do not originate from the cellulose microfibrils. This may be conveniently accomplished, for instance, by removing such objects of macroscopic dimensions during sample preparation by sieving, centrifuging or by protein hydrolysis.

Typically, one or more photomultiplier tubes are used as the light detectors in the microscope. Preferably the microscope is equipped with three photomultiplier tubes (PMTs). Independent micrographs are micrographs that are non-overlapping, both in the x-y plane and in the z-direction. The micrographs may suitably be recorded at a colour depth higher than 12 bits (for instance at 24 bit RGB), since this can easily be converted to a lower colour depth by well-known means (e.g. using well-known image analysis software including for instance imaged.).

### (C) Digital image analysis

The digital image analysis part of the protocol involves the following steps:
a. Ensuring that the micrographs are present as or converted to a format with a single intensity value for each pixel;
b. Normalising each individual micrograph by recalculating the pixel values of the image so that the range of pixel values used in the image is equal to the maximum range for the given colour depth, thereby requiring 0.4% of the pixels to become saturated;
c. Obtaining for each individual micrograph the image histogram and, if necessary, removing discrete, single point spikes from each histogram by visual inspection and exclude them from the analysis (e.g. using MATLAB);
d. For each individual image histogram determining the full width at half maximum (FWHM), by first determining the maximum count in the histogram and the channel containing this maximum count (the maximum channel), then counting the number N of channels between the first channel containing a value equal or higher than half the maximum and the last channel containing a value equal or higher than half the maximum thereby including this first and last channel in the count N, and then calculating the FWHM by dividing the count N by the total number of channels;
e. Calculating the composition homogeneity parameter CHP, wherein CHP is the average of the FWHM values obtained for the individual micrographs.

The digital image analysis steps may suitably be carried out using well-known image analysis software including for instance imaged. The result of step (a) should be that the image is of a format wherein the intensity for each pixel is expressed as a single value. This is for instance the case if the image is a "grey-scale" image. In contrast, images in RGB format or a related format having three intensity values per pixel should be converted. This is easily achieved by well-known operations in the field of digital image analysis. An example of a suitable output format would be a grey-scale image with 8 bits per pixel.

The normalising operation of step (b) is generally known as a histogram stretch operation or a contrast stretch operation. The normalisation is performed by allowing a small percentage of pixels in the image to become saturated. Here saturation includes both the minimum and maximum value for the given colour depth. In an 8 bit greyscale image, the minimum value would be 0 and typically displayed as black, whilst the maximum value would be 255 and typically displayed as white.

The image histogram of step c. is a well-known property for digital images, representing the distribution of the pixels over the possible intensities, by providing the pixel count for each intensity channel. For the purpose of the spike-removal of step c., the value for a particular channel is considered a spike if it is considerably higher than the values of the adjacent channels, typically at least a factor of 1.5 higher.

The lower half-maximum channel in step (d) corresponds to the channel containing a count of half the maximum count that is furthest away from the maximum channel on the low-intensity side of the maximum channel. Analogously, the upper half-maximum channel corresponds to the channel containing a count of half the maximum count that is furthest away from the maximum channel on the high-intensity side of the maximum channel. The FWHM that is obtained in step (d) will be a value between 0 and 1.

### Example 1

Gelled proteinaceous compositions 1-3 and A were prepared based on the recipe shown in Table 1.

**Table 1**

| **Ingredient** | **wt.%** |
|---|---|
| Soy protein isolate (Supro EX37, ex Solae) ¹ | 12 |
| Citrus fibre (Herbacel AQ+, ex Herbafood) comprising 80-90 wt.% cellulose | 2 |
| Water | 86 |

| | |
|---|---|
| ¹ Thermally gelling protein | |

Compositions 1-3 were prepared by mixing citrus fiber with water, followed by dispersion using an L5M-A (Silverson) mixer for 15 minutes at 3000 rpm. Subsequently the soy protein isolate was added, followed by dispersion using an L5M-A (Silverson) mixer for 30 minutes at 5500 rpm. The resulting mixture was homogenised using a high-pressure homogeniser (Microfluidizer M 110S, 87 µm G-10Z-chamber) operating at various pressures (composition 1 at 500 bar, composition 2 at 1000 bar and composition 3 at 1500 bar). The resulting compositions were heated to 80°C for 30 minutes with a water bath.

Composition A was prepared by adding the soy protein isolate and citrus fibre to water and stirring in a low-shear mixer (Kenwood mixer) for 5 minutes at a minimal speed level. The resulting mixture was heated to 80°C for 30 minutes with a water bath.

Each composition's composition homogeneity parameter (CHP) and elastic compression modulus were determined after their preparation. The results are presented in Table 2.

**Table 2**

| | 1 | 2 | 3 | A |
|---|---|---|---|---|
| CHP | 0.101 ± 0.004 | 0.151 ± 0.022 | 0.185 ± 0.025 | 0.016 ± 0.004 |
| Elastic modulus (kPa) | 12.910 ± 0.522 | 17.011 ± 0.695 | 19.507 ± 1.169 | 6.051 ± 0.674 |

The increase in CHP leads to increase of the elastic compression modulus of the gelling proteinaceous composition.

### Example 2

Two gelled proteinaceous compositions (4 and 5) were prepared based on the recipe shown in Table 1, Example 1. Composition 4 was prepared according to the method described in Example 1 for compositions 1-3, except for the operating pressure of the high-pressure homogeniser being 1250 bar. Composition 5 was prepared according to the same method as composition 4, except that the soy protein was added after the high-pressure homogenisation step.

Each composition's CHP and elastic compression modulus were determined after their preparation. The results are presented in Table 3.

**Table 3**

| | **4** | **5** |
|---|---|---|
| CHP | 0.177 ± 0.035 | 0.140 ± 0.022 |
| Elastic modulus (kPa) | 18.822 ± 2.099 | 12.133 ± 0.404 |

### Example 3

Proteinaceous compositions (6, B, C) were prepared using thermally or non-thermally gelling soy protein based on the recipe shown in Table 4.

**Table 4**

| **Ingredient (wt.%)** | **6** | **B** | **C** |
|---|---|---|---|
| Soy protein isolate (Supro EX37, ex Solae) | 12 | - | - |
| Soy protein isolate (Supro XT 219, ex Solae) ² | - | 2 | 12 |
| Citrus fibre (Herbacel AQ+, ex Herbafood) | 2 | - | - |
| comprising 80-90 wt.% cellulose | | | |
| Citrus fibre (Nutrava, ex CP Kelco) | - | 0.6 | 2 |
| comprising ∼40wt.% cellulose | | | |
| Water | 86 | 97.4 | 86 |

| | | | |
|---|---|---|---|
| ² Non-thermally gelling hydrolysed protein | | | |

The compositions were prepared by mixing citrus fibers with water, followed by dispersion using an L5M-A (Silverson) mixer for 2.5 minutes at 7000 rpm. The resulting dispersion was homogenised using 3 passes at 207 bar (single stage, 3000 psi) with a high-pressure homogeniser (Niro Soavi, GEA). A source of soy protein was added to the mixture, followed by mixing with a Kenwood mixer for 5 minutes at a minimum speed level. The resulting compositions were heated to 80°C for 30 minutes with a water bath.

Following their preparation, the CHP and the elastic compression modulus of each of the compositions were determined. The results are presented in Table 5.

**Table 5**

| | **6** | **B** | **C** |
|---|---|---|---|
| CHP | 0.170 ± 0.030 | 0.069 ± 0.004 | 0.071 ± 0.008 |
| Elastic modulus (kPa) | 13.695 ± 1.067 | ND* | ND* |

| | | | |
|---|---|---|---|
| * ND: not detectable | | | |

### Example 4 - Minced meat analogue

Minced meat analogue compositions (7 and D) were prepared based on the recipe shown in Table 6. The compositions were compared on appearance and frying performance.

**Table 6**

| **Ingredient** | **Wt.%** |
|---|---|
| Soy protein isolate (Supro^{®}620, ex Solae) | 20 |
| Citrus fibre (Herbacel AQ+, ex Herbafood) | 2 |
| Soybean oil | 5 |
| Water | 73 |

Composition 7 was prepared by mixing citrus fibers with water, followed by dispersion using an L5M-A (Silverson) mixer for 15 minutes at 3000 rpm. The resulting dispersion was homogenised using a high-pressure homogeniser (Microfluidizer 110S) operating at 1250 bar. Soybean oil-in-water emulsion was added to the homogenised dispersion using a low-shear mixer (Kenwood). Then, the soy protein was added to the mixture. The resulting homogeneous dough was heated in a thermomixer (Thermomix^{™} TM5, Vorwerk, Germany) for 30 minutes at 90 °C. The obtained gels were then textured via cold extrusion in a multi-food grinder (AT950A, Kenwood, Japan).

Comparative example D was prepared according to the same method as Composition 7, except that no high-pressure homogenisation step was applied.

### Visual appearance

The extrudate of D tended to stick and fuse after the cold-extrusion step. The extrudate of 7 was more firm and brittle, making it easier to handle and it more closely resembled meat-based minced meat.

### Frying performance

Significant differences could be observed after frying of the minced meat analogues. Extrudate 7 resulted in a more elastic and brittle structure (i.e., a more minced meat-like), whereas extrudate D resulted in a denser and stickier, and flat pancake-like structure.

### Example 5 - Non-animal burger

Burgers (7 and D) were formed by hand using the minced meat analogues 7 and D described in Example 4, respectively. After frying, burger D resulted in a stickier, dough-like structure, whereas burger 7 had a better texture, were less pasty and more crumbly, similar to meat-based burgers.

### Example 6 - Sausage analogue

Sausage analogues (8 and E) were prepared based on the recipe shown in Table 7.

**Table 7**

| **Ingredient** | **Wt.%** |
|---|---|
| Soy protein isolate (Supro^{®}620, ex Solae) | 20 |
| Citrus fibre (Herbacel AQ+, ex Herbafood) | 2 |
| Soybean oil | 10 |
| Water | 68 |

Sausage 8 was prepared by mixing citrus fibres with water, followed by dispersion using an L5M-A (Silverson) mixer for 15 minutes at 3000 rpm. The resulting dispersion was homogenised using a high-pressure homogeniser (Microfluidizer 110S) operating at 1250 bar. Soybean oil and water were added to the homogenised dispersion using a low-shear mixer (Kenwood). Then, soy protein was added to the mixture. The resulting mixture was filled into casings and heated at a temperature of 90°C for 10 minutes.

Sausage E was prepared according to the same method as Sausage 8, except that no high-pressure homogenisation step was applied.

Sausage E was "doughy", had less bite, and was less firm and juicy. Sausage 8 was more elastic and had a bite with a texture resembling a sausage made from meat. Sausage 8 was also more firm and juicy.

All used ingredients in the above examples are produced in Europe.

## Claims

1. A gelled proteinaceous food composition with an elastic compression modulus larger than 9 kPa comprising:
a. 3-35 wt.% of thermally gelling non-animal protein;
b. 0.2-6 wt.% of cellulose microfibrils;
c. 0-20 wt.% non-animal lipid;
d. 0-20 wt.% of polysaccharides;
e. 0.1-90 wt.% water;
wherein the composition has a composition homogeneity parameter (CHP) of at least 0.075.

2. The gelled proteinaceous food composition according to claim 1, wherein said composition comprises a weight ratio of cellulose microfibrils to thermally gelling non-animal protein from 1:100-2:1.

3. The gelled proteinaceous food composition according to any one of the preceding claims, wherein the thermally gelling non-animal protein is selected from legume protein, oil seed protein, potato protein or combinations thereof.

4. The gelled proteinaceous food composition according to any one of the preceding claims, wherein the cellulose microfibrils are provided by a source of citrus fruit, tomato, apple, sugar beet or combination thereof.

5. The gelled proteinaceous food composition according to any one of the preceding claims, wherein the composition comprises 0.3-15 wt.% non-animal lipid.

6. The gelled proteinaceous food composition according to any one of the preceding claims, wherein the gelled proteinaceous food composition comprises 1-15 wt.% polysaccharides.

7. The gelled proteinaceous food composition according to any one of the preceding claims, wherein the gelled proteinaceous food composition is a meat analogue and comprises:
a. 10-35 wt.% of thermally gelling non-animal protein;
b. 0.2-6 wt.% of cellulose microfibrils;
c. 0-20 wt.% non-animal lipid;
d. 0-20 wt.% of polysaccharides;
e. 35-85 wt.% water.

8. A method for preparing the gelled proteinaceous food composition according to any one of claims 1-7, comprising the steps of:
i. providing an aqueous dispersion comprising a source of cellulose microfibrils;
ii. producing an aqueous dispersion comprising cellulose microfibrils by treating the aqueous dispersion comprising a source of cellulose microfibrils with high shear and by adding thermally gelling non-animal protein to the aqueous dispersion before, during and/or after the high shear treatment; and
iii. heating the aqueous dispersion comprising cellulose microfibrils and thermally gelling non-animal protein to a temperature between 40-200 °C to produce a gelled proteinaceous composition.

9. The method according to claim 8, wherein the high shear treatment includes one or more steps of high-pressure homogenisation at a pressure between 200-4000 bar.

10. The method according to claim 8 or 9, wherein the thermally gelling non-animal protein is added at least partially to the aqueous dispersion before the high-shear treatment in step ii.

11. The method according to any one of claims 8-10, wherein the produced gelled proteinaceous food composition is shaped into meat analogue shapes, preferably shaped by an extruder.

12. The method according to any one of claims 8-11, wherein the aqueous dispersion comprising cellulose microfibrils and thermally gelling non-animal protein is filled into a sausage casing before step iii.

13. A food product comprising 1-80 wt.% of the gelled proteinaceous food composition according to any one of claim 1-7.

14. The food product according to claim 13, wherein the food product is selected from the group of meat analogues, soups, pasta, noodles, spreads, meal makers, souses, dressings, savoury concentrates, snacks, beverages, and frozen desserts.

15. The food product according to claim 13 or 14, wherein the food product is a meat analogue, further comprising by weight of the meat analogue one or more of:
- 0-60 wt.% of hydrated texturized non-animal protein pieces;
- 0-60 wt.% of a binder; and
- 0-20 wt.% of animal fat tissue analogue.
